# EUROPEAN PATENT SPECIFICATION

(11) **EP 1 255 374 B1**
(45) Date of publication and mention of the grant of the patent: **13.08.2008**
(21) Application number: 01120941.8
(22) Date of filing: 31.08.2001
(51) Int. Cl.: H04L 12/28, H04Q 7/38

(54) **Method for entering a communication unit into a communication cell**
Verfahren für das Eintreten einer Kommunikationseinheit in eine Kommunikationszelle
Procédé pour l'entrée d'une unité de communication dans une cellule de communication

(30) Priority: 05.05.2001 DK 200100702
(43) Date of publication of application: 06.11.2002
(73) Proprietor: TELEFONAKTIEBOLAGET LM ERICSSON (publ), 164 83 Stockholm (SE)
(72) Inventor: Krogh, Jesper, 9000 Älborg (DK)
(74) Representative: Roerboel, Leif

(56) References cited:
- WO-A-00/69186
- WO-A-01/20940
- "Specification of the Bluetooth system, wireless connections made easy, Core, Version 1.1" SPECIFICATION OF THE BLUETOOTH SYSTEM, vol. 1, 22 February 2001 (2001-02-22), pages 110-121,216-235,1064-1069, XP002231210
- ALBRECHT M ET AL: "IP SERVICES OVER BLUETOOTH: LEADING THE WAY TO A NEW MOBILITY" PROCEEDINGS ANNUAL CONFERENCE ON LOCAL COMPUTER NETWORKS. LCN, XX, XX, 1999, pages 2-11, XP001001314

## Description

### TECHNICAL FIELD

The present invention relates to a method for entering a communication unit into a communication cell as described in the preamble of claim 1 and more particularly to such a method for use in connection with short-range wireless communication systems.

### BACKGROUND OF THE INVENTION

A cellular communication system is a communication system where a larger geographical area is subdivided into a number of smaller areas (cells) each covered by an appropriate transmitter/receiver (base station, access point etc.). Such cellular systems are well known and a typical example is the GSM mobile phone system used in Europe.

The spatial extension of cells in mobile telephone systems may be several kilometres depending on the local transmission characteristics. In recent years it has however become desirable to utilise cellular communication also in connection with short range communication, where the spatial extension of the cells are reduced to for instance 10 meters. Such short range systems can be used to replace traditional wirebound connections between various communication units (computers, mobile phones, headphones etc.) and a local network, which is desirable from many practical points of view.

One example of a short-range cellular radio communication network is a Bluetooth® system comprising a number of access points providing overlapping or adjacent radio coverage areas for communication with a number of Bluetooth® slaves in a piconet defined by an access point, each piconet being able to serve a maximum of seven Bluetooth® slaves in an active mode.

Other similar radio communication networks with similar properties are known, and new types may evolve in the future. One advantage of such systems is that a number of mobile and/or stationary units can communicate with a communications network such as a local area network (LAN) without the use of cables to interconnect these units with the network.

Examples of such short-range wireless communication systems are the DECT (Digital Enhanced Cordless Telecommunication) system which according to one embodiment (Siemens DECT engine MD32) is able to control a maximum of 16 terminals (i.e. mobile or stationary units) running 4 simultaneous links at one time.

For cable replacement the infrared standard IrDA has been known and quite widespread for some years. IrDA is however limited to point-to-point connections and requires a clear line of sight.

Short range radio communication technologies using frequency hopping techniques and (as Bluetooth) operating in the 2.4 GHz frequency band are presently known.

One of these is Wireless LAN based on the IEEE 802.11 standard. This technology is used to replace a wired LAN throughout a building. The transmission capacity is high and so is the number of simultaneous users. It is, however, more expensive and power consuming than the Bluetooth wireless technology and the hardware requires more space and is therefore not suited for the application in small mobile devices.

One other short range wireless communications system operating in the 2.4 GHz frequency band is the Home RF which has many similarities with the Bluetooth wireless technology. Home RF can operate ad hoc networks - data only - or be under the control of a connection point co-ordinating the system and providing a gateway to the telephone network (data and voice). Frequency hopping is applied with a hop frequency of 8 Hz while a Bluetooth link hops at 1600 Hz.

Finally Ultra-Wideband Radio (UWB) is a new radio technology still under development. According to this technology short pulses are transmitted in a broad frequency range. The capacity is indicated to be high while power consumption is expected to be low.

In accordance with the Bluetooth® Specification 1.1, it is possible to perform hand-over of point-to-point protocol sessions (PPP-sessions), using the existing local area network access profile. Furthermore, it is possible to pre-register a Bluetooth® mobile device with a Bluetooth® access point before performing the hand-over. The following will exemplify this by assuming the mobile as taking the role of Bluetooth® slave, and the Bluetooth® access point as taking the role as Bluetooth® master. However, in order to perform such a pre-registration, the mobile must be in an active mode in the corresponding piconet on the new access point, at least until it is possibly set in a parked mode (a low-power mode). By means of this pre-registration, the hand-over of the mobile from one access point to another can be performed more quickly, thus obtaining a more seamless hand-over.

The fact that a Bluetooth mobile device becomes active in the piconet during pre-registration may cause problems for those devices that are already communicating with the access point defining the piconet. This is caused by the fact that according to the Bluetooth Specification 1.1 [1], every Bluetooth access point (if taking the role as Bluetooth master) can serve a maximum of seven active devices (slaves) as well as an unlimited number of inactive slaves. The limitation to 7 active slaves are due to the AM_ADDR field defined in the baseband packet header, which only consists three bits. The value "000" is reserved to master to broadcast to all slaves hence leaving the AM_ADDR field values: 001, 010, 011, 100, 101, 110 and 111 for addresses to active slaves. Thus, in the case of handover where a mobile moves from a first piconet to a second piconet already containing 7 active mobiles (i.e. slaves), one of these active mobiles must be parked, i.e. brought to an inactive mode, before the new mobile can enter the second piconet. The parked mobile can not become active before the handed over mobile or another active mobile has been brought to an inactive state in the second piconet. The user of an active device in the second piconet thus experiences a temporary interruption of his ongoing communication with the network, which may be annoying and even seriously degrade the usability of the system.

Another way of providing a relatively fast hand-over is described in WO 120940. In accordance with this document, the time for entering into the active mode in connection with a hand-over is reduced without performing a pre-registration, i.e. the slave is not entered into a low-power mode in the new access point. However, this document requires substantive modifications of the hardware of the units in the system, these modifications including the provision of an information collector in each access point and a collected information signal detector and a storage element in each mobile, and possibly including a plurality of additional transmitters in the access points.

### DISCLOSURE OF THE INVENTION

Based on this prior art, it is the object of the present invention to provide a method for entering a communication unit into a communication cell of the kind referred to above, where said communication unit may be a Bluetooth mobile device and said communication may be in a piconet defined by a Bluetooth access point, with which it is possible to pre-register the communication unit in a communication cell without said pre-registration procedure occupying an active mode in said communication cell during the pre-registration, whereby a subsequent hand-over can be performed relatively quickly, and this object is achieved with a method of said kind, which according to the present invention also comprises the features set forth in the characterising clause of claim 1. With this arrangement, the pre-registration can be performed without occupying an active mode connection in the access point, whereby possible other active communication units will not be disturbed by the pre-registration, thus maintaining the available bandwidth for such active communication unit.

According to the present invention this object is more specifically attained by in said request for communication to include an indication that the connection should be established in a low-power mode and furthermore that exchange of data between the communication unit and the access point defining the communication cell takes place in a non-active mode, whereby a low-power mode connection is established without the communication unit and the access point being in the active mode during said exchange of data.

Pre-registration of a mobile unit in a second piconet according to the Bluetooth specification 1.1 [1] comprises the following steps:

In order to detect each other the mobile unit and AP2 carries out an inquiry procedure. However, if the mobile unit and AP2 have a priory knowledge of each other they may skip the inquiry procedure and go directly to the paging procedure according to the Bluetooth Specification 1.1.
a) Assuming successful enquiry the AP2 and the mobile unit uses the paging procedure to establish a channel between them.
b) After successful connection establishment the mobile unit has become an active member of the piconet defined by AP2, i.e. the unit has been associated with an active member address, AM_ADDR.
c) In the case of pre-registration it is assumed that the mobile unit is not required to participate in immediate communication in the second piconet and it is advantageous to set the mobile node in a park mode (or alternatively in so-called "sniff" or "hold" modes as mentioned below). Parking the mobile unit ensures that resources are released in the second piconet, as the mobile unit does not occupy an active member address in the second piconet.
d) When it is decided to perform a hand-over of the communication of the mobile unit between AP1 and AP2 the mobile is required to become active in the second piconet. After the handover has taken place the mobile node may become parked in the first piconet, assuming it is still within radio range of AP1.

Referring to the background of the invention according to the Bluetooth protocol each piconet could accommodate a maximum number of 7 active communication units or slaves. Now, assume that 7 such communication units are in fact already active in a specific piconet the above pre-registration procedure can only be carried out by de-activating or parking one of these active units temporarily during the pre-registration period. The following scenario results in this case:

### SCENARIO 1

1. The mobile unit and AP2 discover each other.
2. The mobile unit requests a connection establishment between itself and AP2.
3. AP2 must select to park an already active mobile unit in its piconet.
4. The mobile unit is now allowed to enter the piconet as an active member.
5. The mobile unit must be parked in the piconet. This is likely to be initiated by AP2.
6. The mobile unit parked in (3) must be unparked in the piconet again in order to be able to continue its communication

### According to the present invention the above scenario changes to the following:

### SCENARIO 2

1. The mobile unit and AP2 discover each other.
2. The mobile unit requests a connection establishment between itself and AP2, but in this case as a parked member.
3. The mobile unit is allowed to enter the piconet as a parked member

Thus, according to the present invention the piconet is not occupied during the time it takes to perform the steps 3 to 6 (both included) of the first of the above scenarios plus the time required to associate an active member address AM_ADDR to the mobile unit as well as to transmit information on the beacon interval from AP2 to the mobile unit.

By means of this extension of the paging procedure according to the Bluetooth protocol more bandwidth in the piconet can be utilised for actual data transmission. Moreover, the node (mobile unit) that previously risked to get parked will not be broad to suffer from a delay.

In the preceding, the de-activating of a currently active unit in a piconet has been accomplished by letting the unit enter the park mode according to the Bluetooth Specification 1.1. It is however also possible to de-activate the unit by entering this into the sniff- or hold modes of the Bluetooth Specification 1.1 [1].

### BRIEF DESCRIPTION OF THE DRAWINGS

In the following detailed part of the present description, the invention will be explained in more detail with reference to the exemplary embodiments of a method according to the invention illustrated in the drawings, in which
Figure 1 depicts a scenario with a communication unit positioned within radio range of two access points,
Figure 2 depicts a scenario with a communication unit entering the radio range of an access point, said access point already busy in communication with seven active communication units (slaves),
Figure 3 illustrates a possible implementation of the indication of a desired connection mode in a Bluetooth system, and
Figure 4 illustrates the corresponding modification of the link manager protocol specification.

### DESCRIPTION OF THE PREFERRED EMBODIMENT

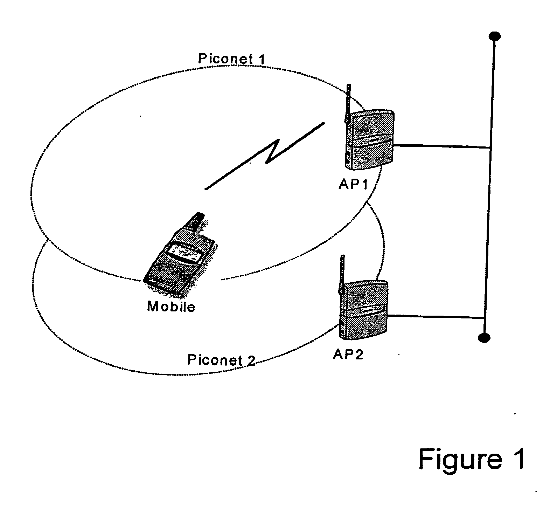

In the scenario depicted in Figure 1, where a Bluetooth® mobile device is located within the radio range of two Bluetooth® access points AP1 and AP2, the mobile may be member in a piconet with both AP1 and AP2. If the mobile's session is to be handed over between AP1 and AP2, it is advantageous if the mobile is pre-registered with the access point to which the session is to be handed over. Such pre-registration is equal to connection establishment between the mobile unit and the access point. If a pre-registration has been performed, the time it takes to perform the hand-over is reduced due to the fact that a connection is established on beforehand, whereby the hand-over can be performed as a seamless hand-over. A pre-registration of the mobile unit with the access point AP2 based on the Bluetooth® Specification 1.1 results in the following scenario. This example assumes that AP1 and AP2 both take the master role in the Bluetooth®master/slave relationship and that the mobile is already member of the piconet defined by the access point AP1, i.e. a connection already exists between the mobile and the access point AP1.

Inquiry procedure: In order to detect each other, the mobile and the access point AP2 should use the inquiry procedure. If, however, the mobile and AP2 has a priori knowledge of each other, the may skip the inquiry procedure and go directly to the paging procedure according to Bluetooth® Specification 1.1.

Assuming successful inquiry, AP2 and the mobile uses the paging procedure to establish a channel between them. It should be noted that the connection establishment described is according to the descriptions in the Bluetooth® Specification 1.1, and thus includes inquiry, paging and service discovery mechanisms.

After successful establishment, the mobile is an active member of the piconet defined by the access point AP2; i.e. it is associated with an active member address, AM_ADDR, with the access point AP2 as master.

In the case where the mobile is pre-registering with the access point AP2, it is advantageous to set the mobile node in parked mode. Parking the mobile ensures that resources are released in the piconet defined by the access point AP2, as the mobile does not consume an active member address in this piconet.

When it is decided to perform a hand-over of the sessions with the mobile between the access point AP1 and the access point AP2, the mobile should become active in the piconet defined by the access point AP2. After the hand-over, the mobile node may become parked in the piconet defined by the access point AP1, assuming it is still within radio range of the access point AP1. It should be noted that how to decide when the hand-over should be executed and what triggers it, is outside the scope of the present invention.

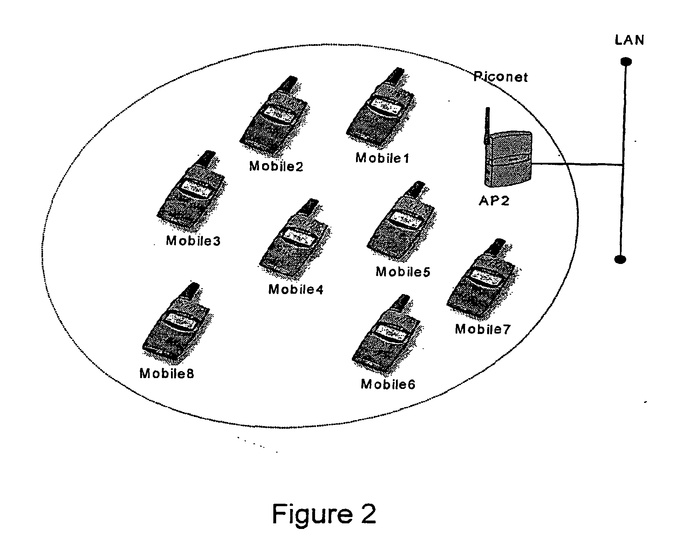

According to the Bluetooth® Specification 1.1, every Bluetooth® master can serve a maximum of seven active slaves, as well as an unlimited number of inactive slaves, i.e. slaves in a low-power mode such as parked mode, sniff mode or hold mode. In the case where the piconet defined by the access point AP2 already has seven active mobiles (i.e. active slaves), as illustrated in Figure 2, one of these seven active mobiles must be parked before the mobile unit can enter the piconet defined by the access point AP2, and the parked mobile cannot become active again before the mobile has been parked subsequently. It will be noticed that parking of any of the seven active mobiles will result in the possibility that the parked slave can become unparked again. However, in this scenario it is assumed that the mobile has a desire for being parked due to the desire of pre-registration, and it is thus obvious to park the mobile. This scenario results in bandwidth being used for parking one of the active slaves, parking the incoming mobile and unparking the previously active slave again.

When the access point AP2 requests an active mobile to be parked, it first finalises the transmission of the current ACL packet (if any) to that particular slave and afterwards transmits the LMP_park_req to the mobile. Assuming the mobile accepts to enter the parked mode, it finalises the transmission of the current ACL packet (if any) and responds with a LMP_accepted. When the mobile enqueues the LMP_accepted, it starts a timer for 6*Tₚₒₗₗ slots, where Tₚₒₗₗ is the poll interval, which is the maximum time between subsequent transmissions from the Bluetooth master to a particular Bluetooth slave. In accordance with Bluetooth® Specification 1.1, [1], the default value of Tₚₒₗₗ is 40 slots. This timer period denotes the worst case before the Bluetooth slave enters the parked mode. On receipt of the LMP_accepted, the Bluetooth master starts a corresponding timer for 6*Tₚₒₗₗ slots. When the master's timer expires, the AM_ADDR can be re-used. Thus, the mobile can be assigned this AM_ADDR, as a connection is established between the access point AP2 and the mobile.

The time needed to park the mobile is corresponding to what is described above for parking the slave.

When the access point AP2 should unpark a parked mobile, it transmits a LMP_unpark_BD_ADDR_req or a LMP_unpark_PM_ADDR_req in the beacon slot negotiated, when the mobile was parked. Unparking is done using beacon trains transmitted periodically with a pre-negotiated fixed interval in between, i.e. the sleep interval. Afterwards, the access point AP2 must transmit a poll packet to the mobile to detect whether or not it has been activated in the piconet, and thus has received the AM_ADDR transmitted in the beacon slot.

As described above, an active mobile in the piconet defined by the access point AP2 is parked, when the mobile requests a connection. Subsequently, when the mobile has been parked in the piconet defined by the access point AP2, the parked mobile is unparked again. Hereby the service to that particular mobile device is interrupted, and thus the user experience on that device is degraded.

The present invention provides an extension of the existing mechanisms for entering Bluetooth® devices into Bluetooth® piconets, that allows Bluetooth® devices to enter a piconet but without having been active in that particular piconet. Thus, mobiles already active in that particular piconet and possibly busy exchanging data with the access point AP2 do not risk getting parked.

The scenario illustrated in Figure 2, where a mobile device (mobile 8) enters into the radio range of the access point AP2, shows that the piconet, in which the access point AP2 is master, is fully occupied, i.e. there are already seven active mobiles, mobile numbers 1-7, connected to the access point AP2.

The following list describes how the mobile unit can join the piconet, in which the access point AP2 is master, as a parked slave, when proceeding in accordance with Bluetooth® Specification 1.1, as described above.

### List No. 1:

a) Mobile and access point AP2 discovers each other.
b) Mobile requests a connection between itself and the access point AP2.
c) The access point AP2 must select to park an already active slave in the piconet, e.g. mobile 7.
d) The mobile 8 is now allowed to enter the piconet as an active member.
e) The mobile 8 must be parked in the piconet. This parking is likely to be initiated by the access point AP2.
f) The mobile 7 must be unparked in the piconet in order to participate actively in data transmission again.

With the present invention, this scenario changes to the following.

### List 2:

A) Mobile 8 and the access point AP2 discover each other.
B) Mobile 8 requests a connection between itself and the access point AP2, but in this case as a parked member. During the connection set-up, the park sleep interval is exchanged.
C) Mobile 8 is allowed to enter the piconet as a parked member.

Thus, in accordance with the present invention, the piconet in Figure 2 avoids being occupied during the time it takes to perform the actions c) to f) (both included) in list 1, plus the time it takes to associate an AM_ADDR to the mobile as well as transmit information on the beacon interval from the access point AP2 to the mobile.

With this extension of the paging procedure, more bandwidth in the piconet can be utilised for actual data transmission. Moreover, the node that previously risked getting parked, i.e. mobile 7, does not suffice a delay consisting of the following products:
6*Tₚₒₗₗ slots at the Bluetooth master to park the active Bluetooth master
6*Tₚₒₗₗ slots at the Bluetooth master to park the incoming mobile (mobile 8)
sleep interval
time to poll unparked slave

In addition to what is described above, this proposal can be applied with respect to the other low-power modes specified in the Bluetooth® Specification 1.1. Thus, this invention ensures that the mobile unit may enter a piconet in parked mode, sniff mode and hold mode, dependent on what is requested at connection set-up.

### Implementation proposal

This section describes one possible way of implementing the above-described invention into the Bluetooth® Specification 1.1.

Following the scenario described above, the Bluetooth® mobile device is responsible for requesting a connection set-up to the Bluetooth® access point AP2. By extending the LMP PDU LMP_host_connection_req with an additional parameter "member state", the mobile is now able to inform the access point AP2 that it desires to enter the piconet in a low-power mode.

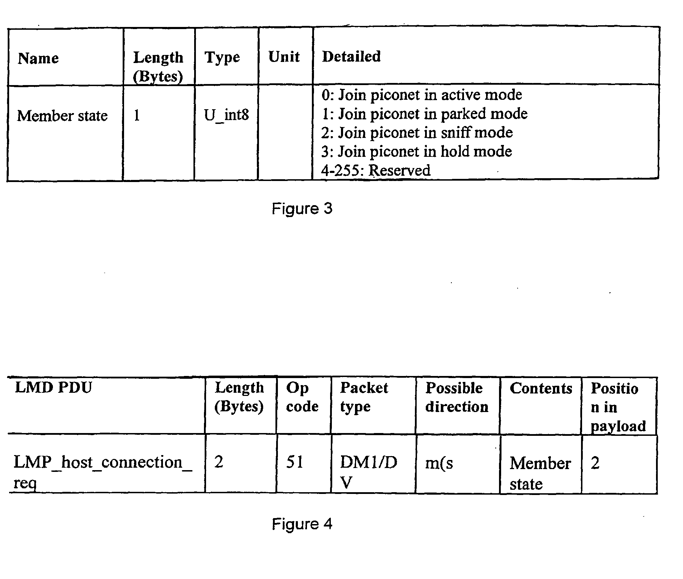

Figure 3 describes the suggested "member state" parameter, which can be seen as an extension of the Table 5.2 in the section "Link Manager Protocol" of the Bluetooth® Specification 1.1.

The extension of this LMP PDU LMP_host_connection_req results in a corresponding modification of the Table 5.1 in the section "Link Manager Protocol" in the Bluetooth® Specification 1.1, as shown in Figure 4.

After receiving the request, the receiving access point should initiate and use the traditional mechanisms for parked mode, sniff mode and hold mode. Thus, the access point AP2 is able to request the mobile to enter either of these low-power modes.

Although, the invention above has been described in connection with a preferred embodiment comprising a Bluetooth® communication system, it will be evident for a man skilled in the art that the invention can be used in many other connections where similar properties are present and corresponding problems are met.

Bluetooth SIG, Specification of the Bluetooth System, Version 1.1, February 2001.

## Claims

1. Method for entering a communication unit into a communication cell defined by the radio coverage area of an access point, said communication cell being part of a cellular radio communication network, in which the connection between the communication unit and access point can assume at least two different modes, namely a low-power mode and an active mode, the cellular radio communication network comprising at least two access points with overlapping or adjacent radio coverage areas, each access point having a limited number of active mode connections and a number of low-power mode connections which may be substantially larger than the number of active mode connections, the at least two access points being able to hand over the communication unit, said method comprising the steps of:
the communication unit discovering that it is within the radio coverage area of an access point,
the communication unit requesting a connection to the access point,
**characterized by** comprising the further steps:
including in said request for a connection, an indication that the connection should be in a low-power mode,
exchange of data between the communication unit and the access point in a non-active mode resulting in obtaining a low-power mode connection without having been in an active mode during said exchange of data.

2. Method in accordance with claim 1,
**characterized by** comprising the step of
including in said request for a connection, an indication that the connection should be established in the active mode or in a specified one of several possible low-power modes.

3. Method in accordance with claim 1 or 2,
**characterized by** comprising the steps of
establishing an active mode connection between the communication unit and one access point and at least one low-power mode connection with at least one other access point.

4. Method in accordance with claim 3,
**characterized by** comprising the step of
performing hand-over of the communication unit between two access points by
a) converting the active mode connection into a low-power mode connection, and
b) converting a low-power mode connection into an active mode connection using the data exchanged during establishment of the low-power mode connection and maintained/updated during the low-power mode connection, to establish the active mode connection.

5. Method in accordance with any of the preceding claims, wherein the communication network is a Bluetooth® system and the communication unit is a Bluetooth® unit,
**characterized by** the data exchanged between the communication unit and the access point comprises
address information, timing information, etc., necessary for setting up the connection in the required mode.

6. Method in accordance with claim 5, **characterized by** comprising the step of implementing the inclusion of the indication in the LMP_host_connection_request by extending this with an additional parameter "member state".

7. Method in accordance with claim 5 or 6, **characterized by** the low-power modes comprising parked mode, sniff mode and hold mode.

## Patentansprüche

1. Verfahren zum Eintreten einer Kommunikationseinheit in eine Kommunikationszelle definiert durch den Funkdeckungsbereich eines Zugriffspunkts, welche Kommunikationszelle Teil eines zellularen Funkkommunikationsnetzwerks ist, in welchem die Verbindung zwischen der Kommunikationseinheit und dem Zugriffspunkt mindestens zwei verschiedene Modi annehmen kann, nämlich einen Niederleistungsmodus und einen aktiven Modus, indem das zellulare Funkkommunikationsnetzwerk mindestens zwei Zugriffspunkte mit sich überlappenden oder benachbarten Funkdeckungsbereichen umfasst, wo jeder Zugriffspunkt eine begrenzte Anzahl von Verbindungen mit aktivem Modus besitzt und eine Anzahl von Verbindungen mit Niederleistungsmodus, die wesentlich grösser als die Anzahl der Verbindungen mit aktivem Modus sein kann, indem die mindestens zwei Zugriffspunkte im Stande sind, die Kommunikationseinheit zu übergeben, welches Verfahren folgende Schritte umfasst:
- die Kommunikationseinheit entdeckt, dass sie sich innerhalb des Funkdeckungsbereichs eines Zugriffspunkts befindet,
- die Kommunikationseinheit fragt eine Verbindung zum Zugriffspunkt ab,
**dadurch gekennzeichnet, dass** es folgende weitere Schritte umfasst:
- Einschluss einer Angabe in die besagte Verbindungsabfrage, dass die Verbindung mit Niederleistungsmodus sein soll,
- Austausch von Daten zwischen der Kommunikationseinheit und dem Zugriffspunkt mit einem nicht-aktiven Modus, welches zum Erhalt einer Verbindung mit Niederleistungsmodus führt, ohne dass diese sich unter dem besagten Datenaustausch in einem aktiven Modus befunden hätte.

2. Verfahren gemäss Anspruch 1, **dadurch gekennzeichnet, dass** es folgenden Schritt umfasst:
- Einschluss einer Angabe in die besagte Verbindungsabfrage, dass die Verbindung mit aktivem Modus etabliert werden soll oder mit einem spezifischen Niederleistungsmodus unter mehreren möglichen Niederleistungsmodi.

3. Verfahren gemäss Anspruch 1 oder 2, **dadurch gekennzeich** - **net, dass** es folgenden Schritt umfasst:
- Etablierung einer Verbindung mit aktivem Modus zwischen der Kommunikationseinheit und einem Zugriffspunkt und mindestens einer Verbindung mit Niederleistungsmodus mit mindestens einem anderen Zugriffspunkt.

4. VerfahrengemässAnspruch3, **dadurch gekennzeichnet, dass** es folgenden Schritt umfasst:
- Ausübung einer Übergebung der Kommunikationseinheit zwischen zwei Zugriffspunkten durch
a) Konvertierung der Verbindung mit aktivem Modus in eine Verbindung mit Niederleistungsmodus, und
b) Konvertierung einer Verbindung mit Niederleistungsmodus in eine Verbindung mit aktivem Modus unter Verwendung der Daten, die unter der Etablierung der Verbindung mit Niederleistungsmodus ausgetauscht und während der Verbindung mit Niederleistungsmodus aufrechterhalten/aufdatiert wurden, zur Etablierung der Verbindung mit aktivem Modus.

5. Verfahren gemäss einem jeglichen der vorhergehenden Ansprüche, worin das Kommunikationsnetzwerk ein Bluetooth®-System und die Kommunikationseinheit eine Bluetooth®-Einheit ist,
**dadurch gekennzeichnet, dass** die zwischen der Kommunikationseinheit und dem Zugriffspunkt ausgetauschten Daten Adresseninformationen, zeitliche Informationen, usw. umfassen, die zur Bildung der Verbindung mit dem gewünschten Modus nötig sind.

6. Verfahren gemäss Anspruch 5, **dadurch gekennzeichnet, dass** es folgenden Schritt umfasst:
- Implementierung des Einschlusses der Angabe in die LMP_Wirt_Verbindung_Abfrage durch deren Ausweitung mit einem weiteren Parameter "Mitgliedszustand".

7. Verfahren gemäss Anspruch 5 oder 6, **dadurch gekennzeich - net, dass** die Niederleistungsmodi PARK-Modus, SNIFF-Modus und HALT-Modus umfassen.

## Revendications

1. Procédé pour l'entrée d'une unité de communication dans une cellule de communication définie par la zone de couverture radioélectrique d'un point d'accès, ladite cellule de communication faisant partie d'un réseau de communication radioélectrique cellulaire, dans lequel la connexion entre l'unité de communication et le point d'accès peut assumer au moins deux différents modes, à savoir un mode de basse puissance et un mode actif, le réseau de communication radioélectrique cellulaire comprenant au moins deux points d'accès avec des zones de couverture radioélectrique recouvrant ou adjacent, chaque point d'accès ayant un nombre limité de connexions de mode actif et un nombre de connexions de mode de basse puissance qui peuvent être substantiellement plus large que le nombre de connexions de mode actif, les au moins deux points d'accès étant capable de transférer l'unité de communication, ledit procédé comprenant les étapes suivantes:
l'unité de communication découvrant qu'elle se trouve à l'intérieur de la zone de couverture radioélectrique d'un point d'accès,
l'unité de communication requérant une connexion au point d'accès,
**caractérisé en ce qu**'il comprenne les étapes supplémentaires suivantes:
comprenant dans ladite requête d'une connexion une indication montrant que la connexion doit être en mode de basse puissance,
échange de données entre l'unité de communication et le point d'accès en un mode non actif ayant pour résultat d'obtenir une connexion de basse puissance sans avoir été dans un mode actif pendant ledit échange de données.

2. Procédé selon la revendication 1,
**caractérisé en ce qu**'il comprenne l'étape
d'inclure dans ladite requête d'une connexion une indication montrant que la connexion doit être établie dans le mode actif ou dans un mode spécifique parmi un ou plusieurs modes de basse puissance possibles.

3. Procédé selon la revendication 1 ou 2,
**caractérisé en ce qu**'il comprenne les étapes
d'établir une connexion de mode actif entre l'unité de communication et un point d'accès et au moins un mode de connexion de basse puissance avec au moins un autre point d'accès.

4. Procédé selon la revendication 3,
**caractérisé en ce qu**'il comprenne l'étape
de transférer l'unité de communication entre deux points d'accès par
a) la conversion de la connexion de mode actif en une connexion de mode de basse puissance, et
b) la conversion d'une connexion de mode de basse puissance en une connexion de mode actif utilisant les données échangées pendant l'établissement de la connexion de mode de basse puissance et maintenues/mise à jour pendant la connexion de mode de basse puissance pour établir la connexion de mode actif.

5. Procédé selon l'une quelconque des revendications précédentes, où le réseau de communication est un système Bluetooth® et où l'unité de communication est une unité Bluetooth®,
**caractérisé en ce que** les données échangées entre l'unité de communication et le point d'accès comprennent
de l'information d'adresse, de l'information de chronométrage etc., ce qui est nécessaire pour la mise en place de la connexion dans le mode requis.

6. Procédé selon la revendication 5, **caractérisé en ce que** le procédé comprenne l'étape d'implémenter l'inclusion de l'indication dans la LMP _hôte_connexion_requète en étendant ceci avec un paramètre supplémentaire "état de membre".

7. Procédé selon les revendications 5 ou 6, **caractérisé en ce que** les modes de basse puissance comprennent le mode garé, le mode sniff et le mode de mise en attente.
